# EUROPEAN PATENT SPECIFICATION

(11) **EP 1 579 726 B1**
(45) Date of publication and mention of the grant of the patent: **29.08.2007**
(21) Application number: 03813224.7
(22) Date of filing: 03.12.2003
(51) Int. Cl.: H04Q 7/38

(54) **SEAMLESS CHANGE OF RADIO ACCESS NETWORK DEPENDING ON REQUIRED QUALITY OF SERVICE (QOS)**
NAHTLOSE ÄNDERUNG DES FUNKZUGRIFFNETZWERKS ABHÄNGIG VON DER ERFORDERLICHEN DIENSTGÜTE (QOS)
CHANGEMENT SANS COUPURE DE RESEAU D'ACCES RADIO DEPENDANT DE LA QUALITE DE SERVICE (QOS) REQUISE

(30) Priority: 17.12.2002 US 320548
(43) Date of publication of application: 28.09.2005
(73) Proprietor: Nokia Corporation, 02150 Espoo (FI)
(72) Inventor: VIRTANEN, Jarmo, FIN-00330 Helsinki (FI); KAURANEN, Kari, FIN-00510 Helsinki (FI)
(74) Representative: Eisenführ, Speiser & Partner
(86) International application number: PCT/IB2003/005600
(87) International publication number: WO 2004/056150

(56) References cited:
- WO-A-00/44189
- WO-A-01/31963
- WO-A-02/01902
- "ETSI TS 123060, V3.5.0, Digital cellular telecommunications system (Phase 2+)(GSM);Universal Mobile Telecommunications System (UMTS); General Packet Radio Service (GPRS); Service Description; Stage 2" ETSI TS 123 060 V3.5.0, XX, XX, 1 October 2000 (2000-10-01), pages 1-182, XP002166045

## Description

### FIELD OF THE INVENTION

The present invention rotates to a method, network element and terminal device according to the preamble of claims 1, 4, 7 and 10, respectively.

### BACKGROUND OF THE INVENTION

Telecommunication networks can be divided into circuit switched networks and packet switched networks. In circuit switched networks, a circuit is allocated to the communication prior to the beginning of the transmission. In connectionless packet switched networks, the transmission medium is common to all users. The information is sent in packets, and all packets contain information about their destination. Therefore, in connection-oriented packet switched techniques, a method of establishing virtual circuits is known. A virtual circuit comprises predetermined legs between network elements, and every packet in a connection is routed along the same route. Thus, the information is routed as in circuit switch networks. Every packet includes information about its virtual circuit, and every network element holds context information which tells where to route a packet with a known virtual circuit and what identifers to use on the next leg.

An example of a system utilizing virtual circuits is the GPRS system. The basic structure of a GPRS network comprises at least one Serving GPRS Support Node (SGSN), at least one Gateway GPRS Support Node (GGSN) and at least one Base Station Subsystem (BSS) connected to a corresponding SGSN and consisting of a Base Station Controller (BSC) and many Base Transceiver Stations (BTSs). Connections to other networks, such as the Internet or an X-25 network are established via the GGSN. Additionally, the network includes a Home Location Register (HLR) where e.g. information about the subscribed services is kept. It is noted that the BSS and the HLR relate to 2G systems, which are replaced in 3G systems by a radio network controller (RNC) and a Home Subscriber Server (HSS), respectively.

Basically, when a mobile station (MS) is located in a cell of a 2G cellular access network, every packet destined to or sent by the MS is transmitted through the same BTS, same BSC, same SGSN and same GGSN. The MS cannot establish a connection to the GGSN if the used SGSN does not hold a context information for this MS. The MS is located in its cell and communicates with the BTS through a radio interface. Between the BTS and the SGSN a virtual circuit is established, and all the packets are transmitted along the same route. In the connectionless packet switched network using the Internet Protocol (IP) between the SGSN and the GGSN, the transmission of different packets may use different routes.

The link between the MS and the SGSN is uniquely identified by a routing area and a temporary logical link identity. The routing area consists of one or several cells, and is used in the GPRS mobility management as location information for mobiles in a so-called stand-by-state in which the mobile has no active connections.

During a transmission via an active connection, the application layer in the MS sends a PDP PDU (Packet Data Protocol Packet Data Unit) which can be, e.g., an IP Packet. The PDU is encapsulated and transmitted between the BSC and the SGSN by the Base Station Subsystem GPRS Protocol (BSSGP). For downlink packets, the BSS checks the cell identity indicated in a BSSGP header, and routes the cells to the appropriate BTS. For uplink packets, the BSC adds to the BSSGP header a cell identity of the MS based on the source BTS. Between the SSGN and the GGSN, the link is identified by the SGSN and GGSN addresses and a tunnel identifier (TID) which identifies the connection in the GGSN and in the SGSN. On the link between the SGSN and the GGSN, a GPRS Tunneling Protocol (GTP) is used.

Each SGSN holds a context information about each MS it handles. The MS monitors GPRS information transmitted on broadcast control channels to find out the locations of GPRS channels. When the MS wants to start using a GPRS service, it initiates a GPRS logon procedure. During the GPRS logon procedure, the context of the logical link between the MS and the SGSN is established using a dedicated control channel as a carrier. During context establishment, the temporary logical link identity is given to the MS to be used as an address for data transmission between the MS and the SGSN. The registration is then forwarded to the GGSN in which the location of the MS is updated. If the GPRS logon procedure was successful, the MS enters the standby state. The GPRS context is preserved as long as the MS stays in the service area of the same SGSN. A cell based routing update procedure is invoked when an active MS enters a new cell. Furthermore, an inter-SGSN routing update is performed if the MS changes from one SGSN area to another and must establish a new connection to the new SGSN. This means that a new context must be created between the MS and the new SGSN, wherein the GGSN is informed about the new location of the MS.

In the new 3G cellular networks, also known as Universal Mobile Telecommunications System (UMTS) networks, many changes are made to the network. Most of these changes are in the way users access the network and its control, now called the radio access network (RAN). The most fundamental change is the air interface. Wideband Code Division Multiple Access (WCDMA) has been chosen as the air interface because of its increased bit rate capabilities and efficiency. This change also represents a large cost for the network operator, as new BTSs will have to be employed, and deployed in the network. Therefore, in the beginning, the 3G components will be used to complement the GSM (General System for Mobile communications) network. Its deployment, will mainly be in highly urbanised areas, with GSM still providing service for rural areas.

In order to handle the change to the 3G system, however, the core network elements and some mobile terminals will be able to handle both 2G and 3G subscribers. An example of the reason for this need is in the security mechanisms used during connection set up. These mechanisms differ in GSM and 3G and therefore these core elements will need to handle both types.

Although the packet core network is evolved from the GPRS packet network, the network will require a new different SGSN, the 3G-SGSN. The functionality of the 3G-SGSN is quite different from that of the original 2G-SGSN especially in terms of mobility management. In large part, this is due to the introduction of the RNC in the RAN, which will take over some of the mobility management functions, allowing soft handovers that are no longer visible to the packet switched core network. In order to allow inter operability between the UMTS and GSM systems, it is necessary to allow inter-system handovers, where the radio access changes between GSM and WCDMA during a transaction. Therefore, in the GSM air interface, it has been enabled to transmit broadcast system information about WCDMA in the downlink direction and vice versa.

However, presently, when a 2G/3G subscriber with a corresponding dual mode terminal device wishes to activate a PDP context with QoS (Quality of Service) parameters which the 2G cannot provide, the only choice for the 2G-SGSN is to accept the PDP activation request but downgrade the QoS for the 2G access. Then, an inter-system routing area update towards a 3G access network can be initiated, after which the QoS can be upgraded again to the level originally requested. However, this procedure can take quite a while and during that time period, the subscriber has to suffer from low-quality access. Moreover, the end-user application may not accept the downgraded QoS at all and, thus, reject the connection.

In this respect, it has to be remembered that the subscriber may have paid for a UMTS access and therefore assumes that an UMTS grade service quality is available no matter which access operator wishes him or her to camp in. In this sense, the subscriber should not be subjected to a downgraded service quality in GSM whilst the WCDMA access network could easily provide the requested quality.

WO-A-00/44189 discloses a method of interworking between different radio access networks, which method serves to support dual mode mobile stations and networks in such a way that the correct radio access which sufficiently supports a requested services is automatically selected. After the service request has been detected, it is analyzed whether or not the access networks meet the required conditions, and a handover of the concerned radio transceiver device is initiated from the first radio access network to the second radio access network if the second radio access network meets the conditions, but the first radio access network does not. The access change or handover is suggested to be decided based on conditions such as service existence, bitrate condition, delay requirements or price of the connection.

Furthermore, WO-A-02/01901 describes an operator forced inter-system handover, where a core network forces handover of a subscriber to another type of radio access network on the basis of operator-specific criteria. The operator-specific criteria may comprise a requested service, subscriber's identity, subscriber's location and/or a required security level. The core network is thus allowed to get control over the radio access network type which is used to provide services to different subscribers.

Additionally, ETSI TS 123060, V3.5.0, XP002166045 suggests negotiating a QoS profile as close as possible to the requested QoS profile which can be either accepted by the terminal device, or dismissed, leading to a deactivation of the PDP context. In case a PDP context activation procedure fails or if the SGSN returns an "Activate PDP Context Reject" message with a cause value, the terminal device may attempt another activation to the same APN up to a maximum number of attempts.

### SUMMARY OF THE INVENTION

It is an object of the present invention to provide a method and system for providing: access to a core network via at least a first and a second access network, by means of which seamless access to the core network can be provided through different access networks.

This object is solved by a method according to claim 1.

Furthermore, the above object is achieved by a network element according to claim 4.

Additionally, the above object is achieved by a network element according to claim 7.

Finally, the above object is achieved by a terminal device according to claim 10.

Accordingly, the network element of the core network does not send a connection set up accept or reject message, but indicates or orders a handover to the access network having a capability matched to the requested connection parameter, e.g. a 3G access network. Thereby, inter-system handover is facilitated during connection set up, e.g. PDP context activation. Using this solution, operators can for example prefer 3G users to camp in 2G access and still seamlessly provide WCDMA access requiring services without the subscribers request being refused or subscriber noticing the QoS downgrade by switching the access prior to the PDP activation.

Preferably, the connection parameter may indicate a quality of service of the connection. Furthermore, the first access network may be a second generation cellular network and the second access network may be a third generation cellular network. The core network may be a GPRS-based network and the connection set up may be a context activation.

The access change information may be transmitted in an access change message directed to the first access network. No changes are required at the terminal device, since the network initiated access change is only indicated to the corresponding network element of the current first access network. A set up reject message is therefore not required.

In particular, the information may be transmitted as a cause value in a context reject message directed to the terminal device. In this case, a fallback procedure to the undesired non-matching system, e.g. the 2G system, can be prevented, and the connection set up can be postponed until access to the matching system, e.g. the 3G system, can be provided.

The network element of the core network may be an SGSN.

Furthermore, the change command transmitted to the terminal device may be a command for ordering an inter-system handover to the second access network.

The network element of the first access network may be a base station controller device of a second generation cellular network.

The response message transmitted to the terminal device may be a context reject message comprising the access change information as a cause value. Then, the terminal device may be arranged to wait for a core network ordered cell change towards the second access network.

### BRIEF DESCRIPTION OF THE DRAWINGS

In the following, the present invention will be described in greater detail on the basis of preferred embodiments with reference to the accompanying drawings, in which:
- Fig. 1: shows a schematic block diagram indicating a network architecture and corresponding processing and signalling flows according to a first preferred embodiment; and
- Fig. 2: shows a network architecture and processing and signalling flows according to a second preferred embodiment.

### DESCRIPTION OF THE PREFFERED EMBODIMENTS

The preferred embodiments will now be described on the basis of a GPRS network environment comprising 2G and 3G access networks.

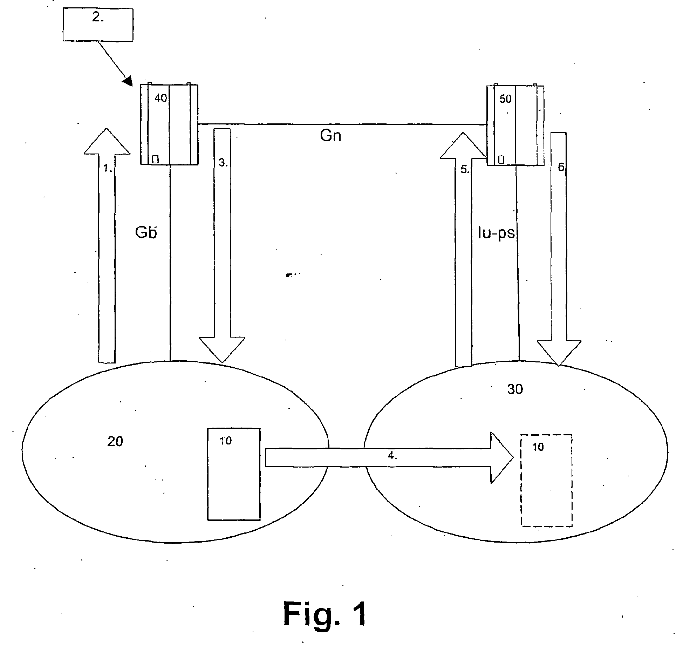

Fig. 1 shows a network architecture, processing and signalling flows according to the first preferred embodiment. According to Fig. 1, a terminal device 10, e.g. an MS or a user equipment (UE), may access a 2G-SGSN 40 of the core network via a GSM access network 20 or a 3G-SGSN 50 via a WCDMA access network 30. The 2G-SGSN 40 is connected to the 3G-SGSN 50 via a Gn interface. Furthermore, the 2G-SGSN 40 is connected to the GSM access network 20 via Gb interface, and the 3G-SGSN 50 is connected to the WCDMA access network 30 via a lu-ps interface.

According to the first preferred embodiment, the 2G-SGSN 40 checks whether a PDP activation request received from the terminal device 10 comprises any connection parameters, e.g. QoS parameters, which the 2G network cannot provide but are possible via a 3G access by the WCDMA access network 30. If so, the 2G-SGSN 40 recognizes that, although it cannot provide the requested connection parameter, it can order an inter-system routing area update to the WCDMA access network 30. Accordingly, the 2G-SGSN 40 rejects the PDP activation request but, however, indicates e.g. in a cause value that the terminal device 10 should wait for an inter-system routing area update (RAU) command and, after a successful completion of RAU, initiate the PDP activation procedure again in the WCDMA access network 30. At the same time, the 2G-SGSN 40 indicates to the respective BSS (not shown) that the terminal device 10 should be handed over to the WCDMA access network 30. After receiving the rejection including the cause code described above, the terminal device 10 enters a state in which it waits for the start of a core network ordered cell change towards the WCDMA access network 30. After the RAU to the WCDMA access network 30 has been completed, the terminal device 10 transmits the PDP context activation request message again, but this time to the new 3G-SGSN 50.

In the following, the access change procedure according the first preferred embodiment is described in greater detail on the basis of the signaling arrows and processing blocks indicated by a corresponding step numbers in Fig. 1.

In step 1, the terminal device 10 sends a PDP activation request including a QoS parameter, e.g. a real-time (RT) conversational class QoS, to the 2G-SGSN 40. Then, in step 2, the 2G-SGSN 40 compares the received QoS parameter with its corresponding capabilities and notices that it cannot comply with the QoS request and that a switch to the WCDMA access network 30 is possible. In step 3, the 2G-SGSN 40 then sends a reject message to the terminal device 10, but includes a new cause code by which the terminal device 10 is requested or ordered to wait for an inter-system RAU to the WCDMA access network 30. This could be achieved by setting an information element (IE) "Service CCO to UTRAN" in the BSSGP's DL-UNITDATA PDU to a "CCO to UTRAN should be made" value. Since this IE is only carried to a BSS (not shown in Fig. 1) in the GSM access network 20, the reject message directed to the terminal device 10 is added to the same PDU and forwarded to the terminal device 10 by the BSS. Thereby, the PDP context activation is rejected and at the same time an inter-system cell change order (CCO) is issued to the BSS. The new cause code may basically indicate to the terminal device 10 that "the PDP context was rejected due to inability to-comply with the connection parameter (e.g. QoS) requirements, but the inter-system cell change command will shortly follow from the BSS and, after change to WCDMA, the same PDP context activation request with the same parameters should be sent again towards the 3G-SGSN 50". After receiving the context reject message with the above new cause code, the terminal device 10 starts to wait for an inter-system cell re-selection command from the BSS. After a suitable cell of the WCDMA access network 30 has been found, the inter-system RAU towards the WCDMA access network 30 is performed in step 4. After the inter-system RAU has been completed, the terminal device 10 sends the PDP context activation request message again in step 5, this time towards the 3G-SGSN 50. Since the 3G-SGSN 50 can meet the QoS requirements, it transmits a corresponding message indicating that the PDP activation request is accepted to the terminal device 10 in step 6. As a result, the PDP context is activated in proper access from the beginning and no downgrades in service are required and recognized by the subscriber.

Consequently, in the first preferred embodiment, a new cause code has to be defined and implemented, and also a corresponding modification has to be introduced to the session management state machine of the terminal device 10 so that the terminal device 10 enters into a state in which it waits for the completion of the inter-system RAU.

It could be advantageous to add some sort of timer or timer functionality to the terminal device 10, which guards the access change. If the inter-system cell re-selection command is not received within a predetermined time frame, the terminal device 10 may then treat the received context reject message as a "common" rejection, i.e. retry the context activation, for example. Then, the 2S-SGSN 40 should be arranged accept the request even without matching or meeting the connection parameter. To achieve this, an information on the first context activation request could be stored at the 2G-SGSN 40 for a certain time period in order to understand that the second context activation request should not be rejected. As an alternative, the terminal device 10 could add an indication such as "do not reject anymore" when making the second context activation request.

Furthermore, the terminal device may indicate to the core network that it supports the above new functionalities, e.g. by using the MS Radio Access Capability IE.

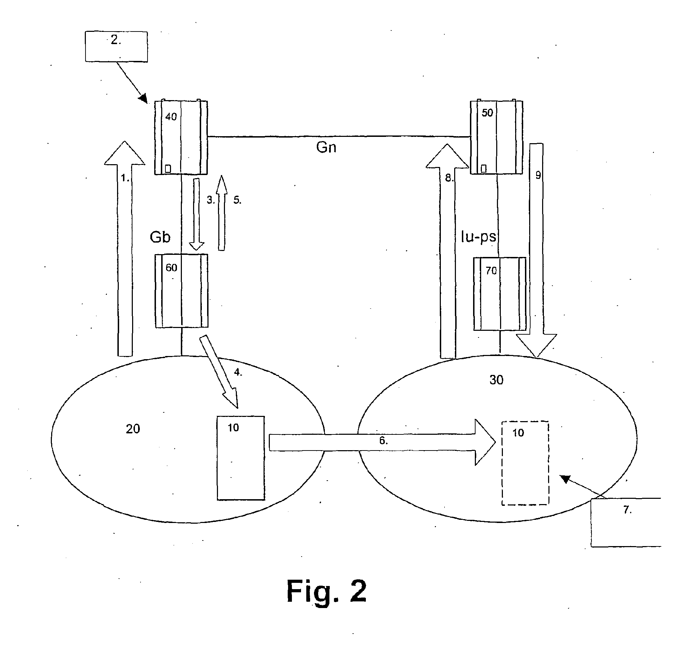

Fig. 2 shows a block diagram indicating a network environment, processing blocks and signaling arrows according to the second preferred embodiment. In contrast to Fig. 1, also a BSC 60 of the GSM access network 20 and an RNC 70 of the WCDMA access network 30 are shown.

According to the second preferred embodiment, the 2G-SGSN 40 neither sends a PDP activation accept nor a PDP activation reject message, but transmits a new BSSGP message whose purpose is to indicate an access switch to the WCDMA access network 30. This new message terminates at the BSC 60 and is acknowledged to the 2G-SGSN 40 after the BSC 60 has commanded an inter-system'cell change to the terminal device 10. Due to this message, the BSC 60 orders an inter-system handover to the WCDMA access network 30 and the terminal device 10 then immediately suspends the ongoing PDP activation procedure, e.g. as described in the 3G PP specification 24.008. Then, the terminal device 10 performs a successful inter-system handover to the WCDMA access network 30 and then resumes the interrupted session management procedure by sending the same PDP context activation message again to the new 3G-SGSN 50.

In case the 2G-SGSN 40 is connected to a BSS of another vendor, the operation of the above method is slightly different. Since the "foreign" BSC 60 naturally doesn't understand the new message, it simply discards it when received. Due to this, the functionality at the 2G-SGSN 40 comprises the following additional feature. If the 2G-SGSN 40 does not receive an acknowledgement from the BSC 60, meaning that the BSC 60 is another vendors' BSC, the 2G-SGSN 40 continues the PDP context activation as normal, i.e. it either accepts or rejects the PDP activation request. This means that there will be no configuration or changes in the 2G-SGSN 40 even though the BSS is a foreign network device. The function of the 2G-SGSN 40 stays the same with any vendors BSS.

In the following, the access change procedure according to the second preferred embodiment is described in greater detail with respect to the step numbers indicated in Fig. 2.

In Fig. 2, a case is shown where a subscriber camping in the GSM access network 20 requests a QoS parameter, e.g. RT QoS, which is only available in the WCDMA access network 30, which corresponds to the initial situation in Fig. 1.

In step 1, the terminal device 10 sends a PDP activation request including RT QoS parameters to the 2G-SGSN 40. Then, in step 2, the 2G-SGSN 40 compares the requested QoS parameters with its capabilities, e.g. checks whether the desired bandwidth for the requested service can be provided by the GSM access network 20, and notices that it cannot comply with the QoS request, but that a switch-over to the WCDMA access network 30 is possible. Consequently, in step 3, the 2G-SGSN 40 does not respond to the PDP activation request at all, but sends a new BSSGP message to the BSC 60. This message indicates that an inter-system handover to the WCDMA access network 30 should be made for this terminal device 10 as soon as possible. However, this new BSSGP message is not transmitted to the terminal device 10 at all, as it is intended to be terminated at the BSC 60. In step 4, the BSC 60 transmits an inter-system handover order to the terminal device 10 which then immediately suspends the ongoing PDP activation procedure to which the 2G-SGSN 40 has not yet answered. After the BSC 60 has commanded the inter-system handover, it acknowledges the new BSSGP message to the 2G-SGSN 40 (step 5). In step 6, an inter-system RAU towards the WCDMA access network 30 is performed by the dual-mode terminal device 10. After the inter-system RAU has been completed, the terminal device 10 resumes its suspended session management procedure (step 7) and does send the same PDP context activation request again, this time towards the 3G-SGSN 50 (step 8). Due to the fact that the 3G-SGSN 50 can meet the requested QoS requirements, it transmits a message indicating that the PDP activation request is accepted (step 9).

Consequently, also in the present second preferred embodiment, the PDP context is activated in proper access from the beginning and no downgrades in the service are required. By implementing the new BSSGP message, the PDP context activation does not have to be accepted with possibly poorer service quality, but the terminal device 10 can be ordered to the WCDMA access network 30 even during the PDP context activation procedure. Thereby, a simple solution to the above problem is provided, since the only required change is the provision of a new message to be implemented to the BSSGP.

It is noted that the present invention is not restricted to the above preferred embodiments, and can be used in any network environment where access is provided to a core network via at least two access networks providing different connection parameters. Moreover, the proposed solutions may also be used to provide a fallback to a lower grade access network, if the requested connection parameters do not require the higher grade access network. Thereby, the load in the higher grade access network can be reduced. Thus, any mismatch between any requested connection parameter and a presently used access network can be used to initiate a network-ordered change of the access networks. The preferred embodiments may thus vary within the scope of the attached claims.

## Claims

1. A method for providing access to a core network via at least a first (20) and a second (30) access networks, said method comprising the steps of:
a) detecting, at a network element (40) of said core network, a connection parameter requested by a terminal device (10) during a connection set up via said first access network (20);
b) comparing said requested connection parameter with a corresponding capability of said network element (40) of said core network; and
c) transmitting from said network element (40) of said core network towards said first access network (20) an information for indicating a network-ordered access change to said second access network (30), if said corresponding capability does not match with said requested connection parameter;
d) wherein said core network is a GPRS-based network and said connection set up is a context activation;
**characterized in that**
e) said information is transmitted as a cause value in a context reject message directed to said terminal device (10).

2. A method according to claim 1, wherein said connection parameter indicates a quality of service of the connection.

3. A method according to claim 1 or 2, wherein said first access network is a second generation cellular network (20) and said second access network is a third generation cellular network (30).

4. A network element (40) for providing access to a core network via a first (20) access network,
a) said network element (40) being arranged to detect a connection parameter received from a terminal device (10) during a connection set up via said first access network (20);
b) said network element (40) being arranged to compare said requested connection parameter with a corresponding capability of said network element (40); and
c) said network element (40) being arranged to transmit towards said first access network (20) an information for indicating a network-ordered access change to a second access network (30), if said corresponding capability does not match with said requested connection parameter;
d) wherein said core network is a GPRS-based network and said connection set up is a context activation;
**characterized in that**
e) said network element (40) is arranged to transmit said information as a cause value in a context reject message directed to said terminal device (10).

5. A network element according to claim 4, wherein said network element is a serving GPRS support node (40).

6. A network element according to claim 4 or 5, wherein said first access network is a second generation cellular network (20) and said second access network is a third generation cellular network.

7. A network element (60) of a first access network (20) providing access to a core network, said network element (60) being arranged to receive from said core network an information for indicating a network-ordered access change to a second access network (30), and to transmit a change command for ordering said access change to a terminal device (10) connected to said network element (60), wherein said information is transmitted by a network element (40) of said core network arranged to detect a connection parameter received from a terminal device (10) during a connection set up via said first access network (20), if a comparison of a requested connection parameter with a corresponding capability of said network element (40) indicates that said corresponding capability does not match with said requested connection parameter, and wherein said core network is a GPRS-based network and said connection set up is a context activation, **characterized in that** said network element (60) is arranged to receive said information as a cause value in a context reject message directed to said terminal device (10).

8. A network element according to claim 7, wherein said change command is a command for ordering an inter-system handover to said second access network (30).

9. A network element according to claim 7 or 8, wherein said network element is a base station controller device (60) of a second generation cellular network (20).

10. A terminal device for providing access to a core network via at least a first (20) and a second (30) access network, wherein an information for indicating a network-ordered access change to said second access network (30) is transmitted by a network element (40) of said core network, arranged to detect a connection parameter received from said terminal device (10) during a connection set up via said first access network (20), if a comparison of a requested connection parameter with a corresponding capability of said network element (40) indicates that said corresponding capability does not match with said requested connection parameter, and wherein said are network is a GPRS based network and said connection set up is a context activation, **characterized in that** said terminal device (10) is arranged to detect said access change information in a response message received from said core network, and to, consequently, initiate a connection set up to said second access network (30), wherein said response message is a context reject message comprising said access change information as a cause value.

11. A terminal device according to claim 10, wherein said terminal device (10) is arranged to wait for a core network ordered cell change towards said second access network (30).

12. A terminal device according to claim 11, wherein said cell change is ordered by an inter-system routing area update command.

13. A terminal device according to any one of claims 10 to 12, wherein said connection set up is a context activation procedure.

14. A terminal device according to claim 10 or 13, wherein said terminal device (10) comprises a timer function for counting a predetermined time period, and wherein said terminal device (10) is arranged to re-transmit a context activation request if said core network ordered cell change is not initiated within said predetermined time period.

15. A terminal device according to claim 14, wherein said terminal device (10) is arranged to add an information indicating that said re-transmitted context activation request shall not be rejected.

16. A terminal device according to any one of claims 10 to 15, wherein said terminal device (10) is arranged to signal support of said detection function to said core network.

## Patentansprüche

1. Verfahren zum Bereitstellen eines Zugangs zu einem Kernnetzwerk über wenigstens ein erstes (20) und ein zweites (30) Zugangsnetzwerk, wobei das Verfahren die Schritte umfasst:
a) Erfassen an einem Netzwerkelement (40) des Kernnetzwerks eines durch eine Endgerätevorrichtung (10) während eines Verbindungsaufbaus über das erste Zugangsnetzwerk (20) angeforderten Verbindungsparameters;
b) Vergleichen des angeforderten Verbindungsparameters mit einer entsprechenden Fähigkeit des Netzwerkelements (40) des Kernnetzwerks; und
c) Übertragen von dem Netzwerkelement (40) des Kernnetzwerks in Richtung des ersten Zugangsnetzwerks (20) einer Information zum Anzeigen einer netzwerkseitig angeordneten Zugangsänderung zu dem zweiten Zugangsnetzwerk (30), wenn die entsprechende Fähigkeit nicht zu dem angeforderten Verbindungsparameter passt;
d) wobei das Kernnetzwerk ein auf GPRS basierendes Netzwerk ist und der Verbindungsaufbau eine Kontextaktivierung ist;
**dadurch gekennzeichnet, dass**
e) die Information als ein Ursachenwert in einer an die Endgerätevorrichtung (10) gerichteten Nachricht zur Kontextzurückweisung ist.

2. Verfahren gemäß Anspruch 1, wobei der Verbindungsparameter eine Dienstqualität der Verbindung anzeigt.

3. Verfahren gemäß Anspruch 1 oder 2, wobei das erste Zugangsnetzwerk ein zellenförmiges Netzwerk (20) der zweiten Generation ist und das zweite Zugangsnetzwerk ein zellenförmiges Netzwerk (30) der dritten Generation ist.

4. Netzwerkelement (40) zum Bereitstellen eines Zugangs zu einem Kernnetzwerk über ein erstes (20) Zugangsnetzwerks, wobei
a) das Netzwerkelement (40) eingerichtet ist, einen von einer Endgerätevorrichtung (10) während eines Verbindungsaufbaus über das erste Zugangsnetzwerk (20) empfangenen Verbindungsparameter zu erfassen;
b) das Netzwerkelement (40) eingerichtet ist, den angeforderten Verbindungsparameter mit einer entsprechenden Fähigkeit des Netzwerkelements (40) zu vergleichen; und
c) das Netzwerkelement (40) eingerichtet ist, in Richtung des ersten Zugangsnetzwerks (20) eine Information zum Anzeigen einer netzwerkangeordneten Zugangsänderung an ein zweites Zugangsnetzwerk (30) zu übertragen, wenn die entsprechende Fähigkeit nicht zu dem angeforderten Verbindungsparameter passt;
d) das Kernnetzwerk ein auf GPRS basierendes Netzwerk ist und der Verbindungsaufbau eine Kontextaktivierung ist;
**dadurch gekennzeichnet, dass**
e) das Netzwerkelement (40) eingerichtet ist, die Information als einen Ursachenwert in einer an die Endgerätevorrichtung (10) gerichtete Nachricht zur Kontextzurückweisung zu übertragen.

5. Netzwerkelement gemäß Anspruch 4, wobei das Netzwerkelement ein bedienender GPRS-Unterstützungsknoten (40) ist.

6. Netzwerkelement gemäß Anspruch 4 oder 5, wobei das erste Zugangsnetzwerk ein zellenförmiges Netzwerk (20) der zweiten Generation ist und das zweite Zugangsnetzwerk ein zellenförmiges Netzwerk der dritten Generation ist.

7. Netzwerkelement (60) eines ersten Zugangsnetzwerks (20), das Zugang zu einem Kernnetzwerk zur Verfügung stellt, wobei das Netzwerkelement (60) eingerichtet ist, von dem Kernnetzwerk eine Information zum Anzeigen einer netzwerkseitig angeordneten Zugangsänderung zu einem zweiten Zugangnetzwerk (30) zu empfangen, und einen Änderungsbefehl zum Anordnen der Zugangsänderung an eine mit dem Netzwerkelement (60) verbundene Endgerätevorrichtung (10) zu übertragen, wobei die Information durch ein Netzwerkelement (40) des Kernnetzwerks übertragen wird, das eingerichtet ist, einen von einer Endgerätevorrichtung (10) während eines Verbindungsaufbaus über das erste Zugangsnetzwerk (20) empfangenen Verbindungsparameter zu erfassen, wenn ein Vergleich eines angeforderten Verbindungsparameters mit einer entsprechenden Fähigkeit des Netzwerkelementes (40) anzeigt, dass die entsprechende Fähigkeit nicht zu dem angeforderten Verbindungsparameter passt, und wobei das Kernnetzwerk ein auf GPRS basierendes Netzwerk ist und der Verbindungsaufbau eine Kontextaktivierung ist,
**dadurch gekennzeichnet, dass** das Netzwerkelement (60) eingerichtet ist, die Information als ein Ursachenwert in einer an die Endgerätevorrichtung (10) gerichteten Nachricht zur Kontextzurückweisung zu empfangen.

8. Netzwerkelement gemäß Anspruch 7, wobei der Änderungsbefehl ein Befehl zum Anordnen eines Inter-System-Handover zu dem zweiten Zugangsnetzwerk (30) ist.

9. Netzwerkelement gemäß Anspruch 7 oder 8, wobei das Netzwerkelement ein Basisstationssteuerungsgerät (60) eines zellenförmigen Netzwerks (20) der zweiten Generation ist.

10. Endgerätevorrichtung zum Bereitstellen eines Zugangs zu einem Kernnetzwerk über wenigstens ein erstes (20) und ein zweites (30) Zugangsnetzwerk, wobei eine Information zum Anzeigen einer netzwerkseitig angeordneten Zugangsänderung zu dem zweiten Zugangsnetzwerk (30) durch ein Netzwerkelement (40) des Kernnetzwerks übertragen wird, das eingerichtet ist, einen von der Endgerätevorrichtung (10) während eines Verbindungsaufbaus über das erste Zugangsnetzwerk (20) empfangenen Verbindungsparameter zu erfassen, wenn ein Vergleich eines angeforderten Verbindungsparameters mit einer entsprechenden Fähigkeit des Netzwerkelementes (40) anzeigt, dass die zugeordnete Fähigkeit nicht zu dem angeforderten Verbindungsparameter passt, und wobei das Kernnetzwerk ein auf GPRS basierendes Netzwerk ist und der Verbindungsaufbau eine Kontextaktivierung ist,
**dadurch gekennzeichnet, dass** die Endgerätevorrichtung (10) eingerichtet ist, die Zugangsänderungsinformation in einer empfangenen Antwortnachricht von dem Kernnetzwerk zu erfassen, und folglich einen Verbindungsaufbau zu dem zweiten Zugangsnetzwerk (30) zu initiieren, wobei die Antwortnachricht eine die Zugangsänderungsinformation als einen Ursachenwert enthaltende Nachricht zur Kontextzurückweisung ist.

11. Endgerätevorrichtung gemäß Anspruch 10, wobei die Endgerätevorrichtung (10) eingerichtet ist, auf eine kernnetzwerkseitig angeordnete Zellenänderung in Richtung des zweiten Zugangsnetzwerks (30) zu warten.

12. Endgerätevorrichtung gemäß Anspruch 11, wobei die Zellenänderung durch einen Befehl Inter-System-Routingbereichsaktualisierung angeordnet wird.

13. Endgerätevorrichtung gemäß einem der Ansprüche 10 bis 12, wobei der Verbindungsaufbau eine Prozedur zur Kontextaktivierung ist.

14. Endgerätevorrichtung gemäß Anspruch 10 oder 13, wobei die Endgerätevorrichtung (10) umfasst eine Zeitgeberfunktion zum Zählen einer vorbestimmten Zeitdauer und wobei die Endgerätevorrichtung (10) eingerichtet ist, eine Anforderung zur Kontextaktivierung neu zu übertragen, wenn die kernnetzwerkseitig angeordnete Zellenänderung nicht innerhalb der vorbestimmten Zeitdauer initiiert wird.

15. Endgerätevorrichtung gemäß Anspruch 14, wobei die Endgerätevorrichtung (10) eingerichtet ist, eine Information, die anzeigt, dass die neu übertragene Anforderung zur Kontextaktivierung nicht zurückgewiesen werden soll.

16. Endgerätevorrichtung gemäß einem der Ansprüche 10 bis 15, wobei die Endgerätevorrichtung (10) eingerichtet ist, Unterstützung der Erfassungsfunktion an das Kernnetzwerk zu signalisieren.

## Revendications

1. Procédé destiné à fournir un accès à un réseau d'infrastructure par l'intermédiaire d'au moins un premier (20) et un second (30) réseau d'accès, ledit procédé comportant les étapes consistant à :
a) détecter, au niveau d'un élément de réseau (40) dudit réseau d'infrastructure, un paramètre de connexion demandé par un dispositif terminal (10) lors de l'établissement de connexion via ledit premier réseau d'accès (20) ;
b) comparer ledit paramètre de connexion demandé à une capacité correspondante dudit élément de réseau (40) dudit réseau d'infrastructure ; et
c) transmettre à partir dudit élément de réseau (40) dudit réseau d'infrastructure vers ledit premier réseau d'accès (20) une information en vue d'indiquer un changement d'accès commandé par le réseau audit second réseau d'accès (30), lorsque ladite capacité correspondante ne concorde pas avec ledit paramètre de connexion demandé ;
d) dans lequel ledit réseau d'infrastructure est un réseau basé sur le service général de radiocommunication par paquets (GPRS) et ledit établissement de connexion est une activation de contexte ;
**caractérisé en ce que**
e) ladite information est transmise en tant qu'une valeur de cause dans un message de rejet de contexte transmis audit dispositif terminal (10).

2. Procédé selon la revendication 1, dans lequel ledit paramètre de connexion indique une qualité de service de la connexion.

3. Procédé selon la revendication 1 ou 2, dans lequel ledit premier réseau d'accès est un réseau cellulaire de deuxième génération (20) et ledit second réseau d'accès est un réseau cellulaire de troisième génération (30).

4. Elément de réseau (40) destiné à fournir un accès à un réseau d'infrastructure via un premier (20) réseau d'accès,
a) ledit élément de réseau (40) étant agencé en vue de détecter un paramètre de connexion reçu d'un dispositif terminal (10) lors de l'établissement d'une connexion par l'intermédiaire dudit premier réseau d'accès (20) ;
b) ledit élément de réseau (40) étant agencé en vue de comparer ledit paramètre de connexion demandé à une capacité correspondante dudit élément de réseau (40) ; et
c) ledit élément de réseau (40) étant agencé en vue de transmettre vers ledit premier réseau d'accès (20) une information en vue d'indiquer un changement d'accès commandé par un réseau à un second réseau d'accès (30), lorsque ladite capacité correspondante ne concorde pas avec ledit paramètre de connexion demandé ;
d) dans lequel ledit réseau d'infrastructure est un réseau basé sur le service général de radiocommunication par paquets (GPRS) et ledit établissement de connexion est une activation de contexte ; **caractérisé en ce que**
e) ledit élément de réseau (40) est agencé en vue de transmettre ladite information en tant qu'une valeur de cause dans un message de rejet de contexte transmis audit dispositif terminal (10).

5. Elément de réseau selon la revendication 4, dans lequel ledit élément de réseau est un noeud de support GPRS de service (40).

6. Elément de réseau selon la revendication 4 ou 5, dans lequel ledit premier réseau d'accès est un réseau cellulaire de deuxième génération (20) et ledit second réseau d'accès est un réseau cellulaire de troisième génération.

7. Elément de réseau (60) d'un premier réseau d'accès (20) fournissant un accès à un réseau d'infrastructure, ledit élément de réseau (60) étant agencé en vue de recevoir dudit réseau d'infrastructure une information en vue d'indiquer un changement d'accès commandé par le réseau à un second réseau d'accès (30), et de transmettre une commande de changement en vue de commander ledit changement d'accès à un dispositif terminal (10) connecté audit élément de réseau (60), dans lequel ladite information est transmise par un élément de réseau (40) dudit réseau d'infrastructure agencé en vue de détecter un paramètre de connexion reçu d'un dispositif terminal (10) lors de l'établissement d'une connexion par l'intermédiaire dudit premier réseau d'accès (20), lorsqu'une comparaison d'un paramètre de connexion demandé avec une capacité correspondante dudit élément de réseau (40) indique que ladite capacité correspondante ne concorde pas avec ledit paramètre de connexion demandé, et dans lequel ledit réseau d'infrastructure est un réseau basé sur le service général de radiocommunication par paquets (GPRS) et ledit établissement de connexion est une activation de contexte, **caractérisé en ce que** ledit élément de réseau (60) est agencé en vue de recevoir ladite information en tant qu'une valeur de cause dans un message de rejet de contexte transmis audit dispositif terminal (10).

8. Elément de réseau selon la revendication 7, dans lequel ladite commande de changement est une commande en vue de commander un transfert inter-système audit second réseau d'accès (30).

9. Elément de réseau selon la revendication 7 ou 8, dans lequel ledit élément de réseau est un dispositif de contrôleur de station de base (60) d'un réseau cellulaire de deuxième génération (20).

10. Dispositif terminal destiné à fournir un accès à un réseau d'infrastructure par l'intermédiaire d'au moins un premier (20) et un second (30) réseaux d'accès, dans lequel une information en vue d'indiquer un changement d'accès commandé par un réseau audit second réseau d'accès (30) est transmise par un élément de réseau (40) d'un tel réseau d'infrastructure agencé en vue de détecter un paramètre de connexion reçu dudit dispositif terminal (10) lors de l'établissement d'une connexion par l'intermédiaire dudit premier réseau d'accès (20), lorsqu'une comparaison d'un paramètre de connexion demandé avec une capacité correspondante dudit élément de réseau (40) indique que ladite capacité correspondante ne concorde pas avec ledit paramètre de connexion demandé ; et dans lequel ledit réseau est un réseau basé sur le service général de radiocommunication par paquets (GPRS) et ledit établissement de connexion est une activation de contexte, **caractérisé en ce que** ledit dispositif terminal (10) est agencé en vue de détecter ladite information de changement d'accès dans un message de réponse reçu dudit réseau d'infrastructure, et en vue de, par conséquent, initier un établissement de connexion audit second réseau d'accès (30), dans lequel ledit message de réponse est un message de rejet de contexte comportant ladite information de changement d'accès en tant qu'une valeur de cause.

11. Dispositif terminal selon la revendication 10, dans lequel ledit dispositif terminal (10) est agencé en vue d'attendre un changement de cellules commandé par le réseau d'infrastructure vers ledit second réseau d'accès (30).

12. Dispositif terminal selon la revendication 11, dans lequel ledit changement de cellules est commandé par une commande de mise à jour de zone de routage inter-système.

13. Dispositif terminal selon l'une quelconque de revendications 10 à 12, dans lequel ledit établissement de connexion est une procédure d'activation de contexte.

14. Dispositif terminal selon la revendication 10 ou 13, dans lequel ledit dispositif terminal (10) comporte une fonction de compteur en vue de compter une période de temps prédéterminée, et dans lequel ledit dispositif terminal (10) est agencé en vue de retransmettre une demande d'activation de contexte lorsque ledit changement de cellules commandé par le réseau d'infrastructure n'est pas initié au cours de ladite période de temps prédéterminée.

15. Dispositif terminal selon la revendication 14, dans lequel ledit dispositif terminal (10) est agencé en vue d'ajouter une information indiquant que ladite demande d'activation de contexte retransmise ne sera pas rejetée.

16. Dispositif terminal selon l'une quelconque de revendications 10 à 15, dans lequel ledit dispositif terminal (10) est agencé en vue de signaler la prise en charge de ladite fonction de détection audit réseau d'infrastructure.
